# EUROPEAN PATENT SPECIFICATION

(11) **EP 3 277 634 B1**
(45) Date of publication and mention of the grant of the patent: **05.02.2020**
(21) Application number: 16725574.4
(22) Date of filing: 01.04.2016
(51) Int. Cl.: C01G 23/047, C01G 23/08, C01G 5/00

(54) **PHOTOCATALYTIC PARTICLES AND PROCESS FOR THE PRODUCTION THEREOF**
PHOTOKATALYTISCHE PARTIKELN UND DESSEN HERSTELLUNGSVERFAHREN
PARTICULES PHOTOCATALYTIQUES ET LEUR PROCÉDÉ DE PRÉPARATION

(30) Priority: 02.04.2015 IT BO20150163
(43) Date of publication of application: 07.02.2018
(73) Proprietor: Granitifiandre S.p.A., 42014 Castellarano (IT)
(72) Inventor: MINOZZI, Federica, 42014 Castellarano (IT); BIANCHI, Claudia Letizia Maddalena, 20133 Milano (IT); PELLINI, Roberto, 42014 Castellarano (IT); CAPUCCI, Valentino, 42014 Castellarano (IT)
(74) Representative: Mangini, Simone
(86) International application number: PCT/IB2016/051886
(87) International publication number: WO 2016/157155

(56) References cited:
- WO-A1-2004/052998
- CN-B- 102 764 649
- DE-A1- 10 131 173
- JP-A- H0 899 812
- JP-A- 2001 038 222
- KIM K D ET AL: "Formation and characterization of Ag-deposited TiO2 nanoparticles by chemical reduction method", SCRIPTA MATERIALIA, ELSEVIER, AMSTERDAM, NL, vol. 54, no. 2, 1 January 2006 (2006-01-01), pages 143-146, XP025027934, ISSN: 1359-6462, DOI: 10.1016/J.SCRIPTAMAT.2005.09.054 [retrieved on 2006-01-01]
- DASTJERDI R ET AL: "A review on the application of inorganic nano-structured materials in the modification of textiles: Focus on anti-microbial properties", COLLOIDS AND SURFACES. B, BIOINTERFACES, ELSEVIER, AMSTERDAM, NL, vol. 79, no. 1, 1 August 2010 (2010-08-01) , pages 5-18, XP027053807, ISSN: 0927-7765 [retrieved on 2010-05-18]
- ZHANG YUN ET AL: "Study of Nano-Ag Particles Doped TiO2 Prepared by Photocatalysis", JOURNAL OF NANOSCIENCE AND NANOTECHNOLOGY, AMERICAN SCIENTIFIC PUBLISHERS, US, vol. 9, no. 6, 1 June 2009 (2009-06-01), pages 3904-3908, XP009187313, ISSN: 1533-4880

## Description

### TECHNICAL FIELD

The present invention relates to a method to produce a treated article and a treated article.

The present invention also relates to composite particles and a process for the production of composite particles.

### BACKGROUND TO THE INVENTION

In the field of ceramic materials it is known to coat objects with TiO₂ so that said objects can express photocatalytic properties. The coating is usually produced using particles of titanium dioxide with nanometric dimensions in order to obtain materials that can be easily cleaned and are able to partially purify the air of organic and inorganic pollutants (for example NOx and SOx). Often, to obtain good adhesion of the TiO₂ on the surface of the objects, organic polymers are used.

The known methods for coating ceramic objects with titanium dioxide and the articles thus obtained have various drawbacks, including the following.

The use of nanometric particles is harmful to health.

The catalytic effects are relatively low and are often non-reproducible.

The solidity of the adhesion of the layer of TiO₂ to the objects is not stable in time.

The international patent application having publication number WO2010146410 (filed by the same applicant) proposes the use of micrometric particles of TiO₂ for the surface treatment of tiles. The laboratory tests have confirmed that the tiles obtained in this way have a photocatalytic efficiency such that under radiation with UV-A light they:
- are photocatalytic by degradation of methylene blue in aqueous phase (ISO 10678:2010);
- are antibacterial also for MRSA bacteria (antibioticresistant) (ISO 27447:2009);
- are able to degrade NOx;
- are able to degrade VOC (ethanol, toluene, acetone, acetaldehyde, formaldehyde);
- are self-cleaning according to the ISO 27448-1:2009 standard;
- have photodegradation activity which takes place also in the aqueous phase. The tests performed both on powders and tiles have shown their efficiency in degradation of organic dyes, acetylsalicylic acid (aspirin), phenol and paracetamol.

It is pointed out, however, that the TiO₂ is photoexcited between 315 and 400 nm (with maximum at 380 nm) in the UV-A range (the theoretical datum of 380 nm is typical of the single crystals).

The tiles treated with TiO₂ are therefore not able to act in the absence of light and are relatively ineffective also when installed in closed environments lit by normal LED lights (which typically emit with wavelengths beyond 400 nm and therefore only in the visible and not in the ultraviolet range) .

The object of the present invention is to provide a method for the production of a treated article, a treated article, composite particles and a process for the production of composite particles which overcome, at least partially, the drawbacks of the known art and are, at the same time, easy and inexpensive to produce and/or use.

### SUMMARY

According to the present invention composite particles and a process for the production of composite particles are provided as claimed in the following independent claims and, preferably, in any one of the claims depending directly or indirectly on the independent claims.

### BRIEF DESCRIPTION OF THE FIGURE

The invention is described below with reference to the attached figure, which illustrates a non-limiting embodiment example thereof, in which:

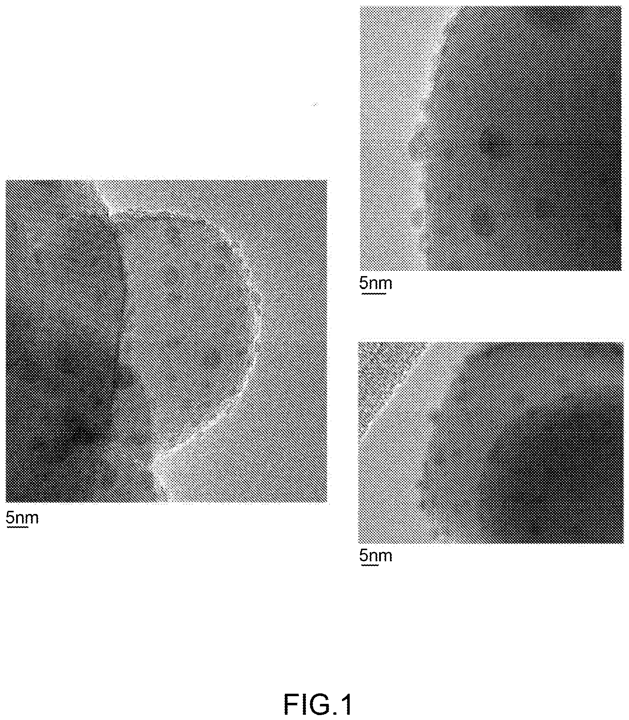

- figure 1 illustrates photographs taken by TEM of microparticles of TiO₂ supporting silver-based nanoparticles according to the present invention.

### DETAILED DISCLOSURE

In accordance with a first aspect of the present invention, composite particles are provided, each of which comprises (in particular, consists of) a microparticle of TiO₂ and a plurality of silver-based nanoparticles (typically, with mean diameter ranging from 1 to 100 nm) supported by the microparticle of TiO₂. More precisely, the microparticle of TiO₂ has a respective outer surface; the silver-based nanoparticles are bound to said outer surface and exposed towards the outside.

In particular, the composite particles have a mean diameter ranging from 0.1 µm to 1 µm (more precisely, 0.5 µm). According to some embodiments, the composite particles have a mean diameter up to 0.2 µm (more precisely, up to 0.13 µm).

In particular, the silver-based nanoparticles comprise (more precisely, are selected from the group consisting of): nanoparticles of silver, of silver oxide and a combination thereof. According to some embodiments, the silver-based nanoparticles comprise silver oxide; more precisely, the silver-based nanoparticles comprise (more precisely, are selected from the group consisting of): nanoparticles of silver oxide and of silver, nanoparticles of silver oxide (and a combination thereof). Advantageously, the silver-based nanoparticles comprise (more precisely are) nanoparticles of a combination of silver and silver oxide.

The composite particles with nanoparticles described above have experimentally shown a surprisingly high activity.

In some cases, the silver-based nanoparticles comprise (more precisely are) silver nanoparticles.

Advantageously, the composite particles comprise from 3% (in particular, from 5%) to 50% (in particular, 30%) by weight of the silver-based nanoparticles with respect to the sum of the weights of the silver-based nanoparticles and the microparticles of TiO₂. In some cases, the composite particles comprise from 3% (in particular, from 5%) to 12% (in particular, 10%) by weight of the silver-based nanoparticles with respect to the sum of the weights of the silver-based nanoparticles and the microparticles of TiO₂.

The percentage by weight of the silver-based nanoparticles, with respect to the sum of the weights of the silver-based nanoparticles and the microparticles of TiO₂, can be measured by means of ICP/OES (inductively coupled plasma optical emission spectrometry) (more precisely, with a Perkin Elmer Optima 8300 instrument).

In particular, the microparticles of TiO₂ have a mean diameter ranging from 0.1 µm to 1 µm (more precisely, 0.5 µm). In some cases, the microparticles of TiO₂ have a mean diameter up to 0.2 µm (more precisely, up to 0.13 µm).

According to some embodiments, the silver-based nanoparticles have a mean diameter ranging from 1 nm to 30 nm (in particular, 20 nm; in some cases, 10 nm).

Unless specified to the contrary, in this text the mean diameter of the microparticles of TiO₂ and the composite particles is measured by means of X-ray diffraction (XRD). More precisely, the calculation of the mean diameter of the microparticles of TiO₂ is performed by means of the Scherrer equation: *t*=0.9λ/(*βₕₖₗ* x cosθ*ₕₖₗ*), in which t is the dimension of the crystallites (corresponding to the particle), λ is the wavelength of the X rays of the radiation for CuKβ, *βₕₖₗ* is the full width at half maximum (FWHM) at the (*hkl*) peak and θ*ₕₖₗ* is the angle of diffraction. In particular, the measurements are performed using a PW3050/60 X'Pert PRO MPD diffractometer by PAN analytical working Bragg-Brentano, and using as source the high-power ceramic tube PW3373/10 LFF with a Cu anode equipped with Ni filter to attenuate Kβ. The dispersed photons were collected by a RTMS (Real Time Multiple Strip) X'accelerator-detector. The measurement can be verified by means of TEM (as indicated below in relation to the silver-based nanoparticles).

Unless specified to the contrary, in this text the mean diameter of the silver-based nanoparticles is measured by means of TEM. More precisely, the calculation of the mean diameter is performed by measuring the largest dimension of one hundred particles (taken at random) and obtaining the mean. In particular, a JEOL 3010-UHR instrument is used (acceleration potential: 300 kV; filament LaB₆).

Advantageously, at least 98% (in particular, at least 99.5%) by weight of the microparticles of TiO₂ with respect to the overall weight of the microparticles of TiO₂ are of anatase. In some specific cases, the microparticles of TiO₂ are of anatase.

According to some embodiments, the composite particles have a surface area (measured by means of BET) ranging from 5 m²/g to 30 m²/g.

In particular, the surface area can be determined by means of conventional methods of N₂ absorption (BET - Brunauer-Emmett-Teller). More precisely, the determination is performed at 77 K using a sorptometer (Costech Mod. 1042).

As better demonstrated by the examples given below, the composite particles according to the present invention have proved to be surprisingly active.

According to some embodiments, the composite particles are obtainable (in particular, obtained) by means of a process In accordance with a second aspect of the present invention (defined below) .

In accordance with a second aspect of the present invention, a process is provided for the production of composite particles (in particular, composite particles according to the first aspect of the present invention).

The process comprises a loading step, during which silver-based nanoparticles are obtained (and) bound to outer surfaces of microparticles of TiO₂ so as to obtain said composite particles.

According to some embodiments, the loading step comprises in turn a mixing sub-step, during which a solution containing silver ions and the microparticles of TiO₂ is kept under stirring so as to obtain an intermediate mixture. More precisely, the mixing sub-step lasts at least 12 hours (in particular, 18 hours to 30 hours) and the solution (containing silver ions and the microparticles of TiO₂) is kept at a temperature ranging from 30°C to 50°C.

Advantageously, the solution has from 3% to 12% by weight of the silver ions with respect to the sum of the weights of the silver ions and microparticles of TiO₂.

According to some embodiments, the loading step also comprises a heating sub-step, which is (at least partially) subsequent to the mixing sub-step. In some cases, during the heating sub-step, the intermediate mixture is kept at a temperature higher than 300°C for at least 30 minutes. More precisely, during the heating sub-step, said intermediate mixture is kept at a temperature ranging from 350°C (in particular, approximately from 390°C) to 600°C (in particular, approximately to 500°C) for a time ranging from 40 minutes to 150 minutes.

Advantageously, the loading step comprises a drying sub-step to reduce the water content of the (more precisely, to dry the) intermediate mixture, providing heat to said intermediate mixture. The drying sub-step is (at least partially) subsequent to the mixing sub-step. In particular, the drying sub-step is (at least partially) previous to the heating sub-step. In some cases, during the drying sub-step, the intermediate mixture is kept at a temperature lower than 150°C (in particular, lower than 120°C; more in particular, lower than 110°C). Advantageously, during the drying sub-step, the intermediate mixture is kept at a temperature higher than 40°C (in particular, higher than 80°C; more in particular, higher than 85°C). More precisely, during the drying sub-step, the intermediate mixture is kept at the temperatures indicated above for at least 10 hours (in particular, at least 20 hours). In particular, during the drying sub-step, the intermediate mixture is kept at the temperatures indicated above up to 35 hours (in particular, up to 30 hours).

According to some embodiments, the loading step also comprises a dissolution sub-step (which is at least partially previous to the mixing sub-step e), during which a silver salt (in particular, AgNO₃) is dissolved in a (polar) solvent. In particular, said solvent comprises (more precisely, is) water. In some cases the dissolution sub-step and the mixing sub-step are (at least partially) overlapping.

Typically, the solution containing silver ions and the microparticles of TiO₂ is water (based). According to specific embodiments, the solution consists of water, the microparticles of TiO₂ and the silver salt (substantially dissolved).

In particular, during the loading step a silver colloid is not present.

Advantageously, the microparticles of TiO₂ and the silver-based nanoparticles are as defined according to the first aspect of the present invention.

According to some embodiments, the process (in particular, the loading step) is carried out in the absence of a reducing agent, for example ammonia, hydrazine, hydrogen, ascorbic acid, NaBH₄ (and a combination thereof).

In particular, the mixing sub-step, the drying sub-step and the heating sub-step are carried out in the absence of a reducing agent, for example ammonia, hydrazine, hydrogen, ascorbic acid, NaBH₄ (and a combination thereof).

This is one of the ways (particularly advantageous) of obtaining silver-based nanoparticles containing silver oxide.

According to some embodiments, the process (in particular, the loading step) is carried out in the absence of an emulsifier (more precisely, surface-active agent), for example CTAB, polyvinylpyrrolidone. In particular, in some cases, the loading step is carried out in the absence of an organic compound.

More precisely, the drying sub-step and the heating sub-step are carried out in the absence of an emulsifier (more precisely, surface-active agent), for example CTAB, polyvinylpyrrolidone. In particular, the drying sub-step and the heating sub-step are carried out in the absence of an organic compound.

It has been experimentally observed that in this way production of the composite particles is surprisingly improved.

In the present text, when it is affirmed that a process or a step are carried out in the absence of a compound (for example an emulsifier and/or an organic compound), it is understood that said process and/or step are carried out without any (one or more) said compound and therefore also without a plurality of said compounds.

Advantageously, the process comprises a sonication step (which is at least partially previous to the loading step e), during which the microparticles of TiO₂ undergo sonication in a liquid, in particular water.

According to some embodiments, the microparticles of TiO₂ are dispersed in water and sonicated at 20 kHz (in particular, with an ULTRASONIC transistor instrument).

Advantageously, the process comprises a wetting step (which is at least partially previous to the loading step e), during which the microparticles of TiO₂ are wetted with an organic solvent (in particular acetone). In this way it is possible to clean and free the pores of the microparticles of TiO₂.

Advantageously, the solution containing silver ions and the microparticles of TiO₂ comprises a dispersing agent. In particular, the dispersing agent is based on polyacrylic acid and sodium (approximately 15% by weight with respect to the overall weight of the dispersing agent). The dispersing agent can, for example, be Reotan L produced by Lamberti S.p.A..

Due to the dispersing agent, an improved and stable suspension of the microparticles of TiO₂ is obtained.

In accordance with a third aspect of the present invention, a method is provided for the production of a treated article, said method comprising an application step, during which composite particles (in particular, the composite particles as per the first aspect of the present invention) are applied on a surface of a base product (comprising ceramic; more precisely, consisting of ceramic). According to some embodiments, the base product is a tile.

In particular, each composite particle comprises (more precisely, consists of) a respective microparticle of TiO₂ and a plurality of respective silver-based nanoparticles supported by the relative microparticle of TiO₂.

According to some embodiments, the composite particles are spray-applied on the surface of the base product.

Advantageously, the silver-based nanoparticles range from 3% to 12% by weight with respect to the overall weight of the microparticles of TiO₂ and the silver-based nanoparticles.

Advantageously, the microparticles of TiO₂ and the silver-based nanoparticles are defined as indicated according to the first aspect of the present invention.

Preferably, the method also comprises a baking step, which is at least partially subsequent to the application step and during which the base product on which the composite particles have been applied is treated at a temperature up to 780°C; more precisely, from 400°C (in particular, from 500°C) to 780°C (in particular, to 750°C; more precisely, to 700°C). In particular, during the baking step the base product (on which the composite particles have been applied) is treated at a temperature ranging from 600°C (in particular, from 630°C) to 690°C (in particular, to 680°C).

According to some embodiments, the base product on which the composite particles have been applied is treated with a heating cycle which entails raising the temperature from an initial temperature lower than 40°C (more precisely, from approximately 20°C to approximately 30°C) to a higher temperature ranging from 400°C (in particular, from 500°C) to 750°C (in particular, to 700°C; more in particular, to 690°C) in a time of at least 30 minutes (in particular, from 30 minutes to 60 minutes; more precisely, from approximately 35 minutes to approximately 50 minutes). Once said temperature has been reached, the base product on which the composite particles have been applied is cooled in a time of at least 30 minutes (in particular, 30 minutes to 60 minutes; more precisely, approximately 35 minutes to approximately 50 minutes) to return approximately to a temperature lower than 40°C (more precisely, from approximately 20°C to approximately 30°C) .

Advantageously, during the application step, at least 0.1 g (more precisely, at least 0.6 g) of composite particles are applied per square metre of said surface of the base product. In particular, during the application step, up to 5 g (more precisely, up to 3 g; even more precisely, up to 1.3 g) of composite particles are applied per square metre of said surface of the base product.

According to some embodiments, the composite particles are applied in a suspension comprising 70% to 90% by volume of water with respect to the overall volume of the suspension. Advantageously, the suspension comprises from 5% (in particular, from 7%; more in particular, from 10%) to 20% by volume of a dispersing agent with respect to the overall volume of the suspension. In particular, the dispersing agent is substantially liquid. More precisely, the dispersing agent is suspension (aqueous).

In some cases, the cited suspension comprises up to 5% (more precisely, up to 3%; even more precisely, up to 2%) by weight of composite particles with respect to the overall weight of the suspension. In particular, the cited suspension comprises at least 0.4% (more precisely, at least 1%; even more precisely, at least 1.5%) by weight of composite particles with respect to the overall weight of the suspension.

In particular, the dispersing agent comprises silica (in suspension) and sodium ion (more precisely, a sodium salt; even more precisely, dissolved in water).

According to some embodiments, the dispersing agent comprises 25% to 35% by weight of sodium ion with respect to the overall weight of the dispersing agent. In some cases, the dispersing agent comprises 40% to 50% by weight, with respect to the overall weight of the dispersing agent, of sodium ion. Advantageously, the dispersing agent comprises 7% to 16% by weight, with respect to the overall weight of the dispersing agent, of silica (in particular quartz). In some cases, the dispersing agent comprises 8% to 15% by weight, with respect to the overall weight of the dispersing agent, of a polysaccharide with high molecular weight.

According to specific embodiments, the dispersing agent comprises (more precisely, is) xanthan gum.

Advantageously, the method comprises a process according to the second aspect of the present invention. More precisely, the method comprises a loading step, during which the silver-based nanoparticles are obtained (and) bound to the outer surfaces so as to obtain said composite particles and which comprises in turn a mixing sub-step and a heating sub-step, which is at least partially subsequent to the mixing sub-step.

Advantageously, during the mixing sub-step a solution containing silver ions and the microparticles of TiO₂ is kept under stirring (in particular, at a temperature from 30°C to 50°C). During the heating sub-step, said solution is kept at a temperature higher than 300°C (in particular, 350°C to 600°C) for at least 30 minutes (in particular, 40 minutes to 80 minutes).

In accordance with a fourth aspect of the present invention, a treated article is provided, obtainable (in particular, obtained) by means of the method as per the third aspect of the present invention. More precisely, the article has a base product comprising ceramic (more precisely, consisting of ceramic).

In particular, the article comprises (a plurality of) composite particles on the (more precisely, bound to the) surface of the article. More precisely, the composite particles are bound to the surface (of the base product).

According to some embodiments, the article has at least 0.1 g (more precisely, 0.6 g) of composite particles per square metre of the cited surface. In particular, the article has up to 5 g (more precisely, up to 3 g; even more precisely, up to 1.3 g) of composite particles per square metre of said surface (of the base product).

More precisely, the composite particles are defined as indicated according to the first aspect of the present invention.

In accordance with a fifth aspect of the present invention, the use of an article is provided according to the fourth aspect of the present invention for photodegradation. In accordance with a sixth aspect of the present invention, the use of an article is provided according to the fourth aspect of the present invention as an antibacterial.

In accordance with a seventh aspect of the present invention, the use of composite particles is provided according to the first aspect of the present invention for photocatalysis.

In accordance with an eighth aspect of the present invention, the use of composite particles is provided according to the first aspect of the present invention for photodegradation. In particular, the use of composite particles according to the first aspect of the present invention is provided for the photodegradation of NOx and/or VOC. More precisely, the use of composite particles is provided according to the first aspect of the present invention for the photodegradation of organic pollutants and/or odours (and/or NOx and/or VOC).

In accordance with a ninth aspect of the present invention, the use of composite particles is provided according to the first aspect of the present invention as an antibacterial.

In accordance with a tenth aspect of the present invention, the use of composite particles is provided according to the first aspect of the present invention for anti-pollution.

Further characteristics of the present invention will become evident from the following description of a merely illustrative non-limiting example.

### Example 1

This example discloses the procedure for the production of microparticles of TiO₂ supporting silver-based nanoparticles (treated particles).

3 grams of TiO₂ powder (Kronos 1077 - microparticles of TiO₂ with mean diameter between 0.1 and 1 µm) were wetted with 10 ml of acetone to remove the surface dirt and free the pores of the oxide.

0.42 g of AgNO₃ (Fluka with 99% purity) were dissolved in 5 ml of water. The solution thus obtained was added to the TiO₂ powder and placed in a flask connected to a rotavapor. In the rotavapor the mixture of the powder and the solution was kept under gentle stirring for approximately 24 hours at approximately 40°C. Subsequently, the wet powder obtained was dried in a stove at approximately 90°C for approximately 24 hours and then calcined for approximately 2 hours at approximately 400-450°C.

Figure 1 illustrates HR-TEM photographs of the treated particles obtained.

The powders were also characterised by means of the following techniques:
i) XRD for verification of the crystallographic phases
ii) FTIR (Fourier transform infrared spectroscopy) for verification of the OH groups on the surface
iii) XPS for verification of the OH groups on the surface
iv) UV-vis for determination of the band gap with data processing according to the Kubelka-Moon model
v) By means of ICP/OES with a Perkin Elmer Optima 8300 instrument, it was verified that the percentage of silver on the microparticles of titanium oxide was approximately 8% by weight.

### Example 2

This example reports unsuccessful attempts made before identifying the procedure described in example 1.

Before identifying the procedure as per example 1, various attempts were made that did not produce satisfactory results.

Initially, an attempt was made to use nanoparticles in a colloidal solution which was then brought into contact with microparticles of TiO₂.

For example a test was performed using the following combination of compounds: Ag colloidal + CTAB (Cetyl trimethylammonium bromide).

Silver nanoparticles were then prepared in situ using base combinations of the following type: AgNO₃ + CTAB or colloidal Ag + AgNO₃ + CTAB.

In these cases, the CTAB acted not only as a stabilizer of the colloid but probably also as an active component in reduction of the silver ion (as described, for example, in "Synthesis of CTAB-IPA reduced copper nanoparticles Materials Chemistry and Physics", Volume 91, Issue 2, Pages 507-512, Anjali A. Athawale, Prachi P. Katre, Manmohan Kumar, Megha B. Majumdar; and "A simple way of preparing high-concentration and high-purity nano copper colloid for conductive ink in inkjet printing technology", Colloids and Surfaces A: Physicochemical and Engineering Aspects, Volume 360, Issue 1, Pages 99-104, Xiao-Feng Tang, Zhen-Guo Yang, Wei-Jiang Wang). The procedure used entails mixing at ambient temperature for approximately 24 hours and then treatment in a vacuum to evaporate the solvent used. The result was then treated in an oven at 100°C for approximately 20 hours.

In this context, the following combinations were used, for example:
- AgNO₃ + CTAB + CuSO₄ + NH₃

   (both at ambient temperature and at high temperature)
- AgNO₃ + Glucose + CTAB + NH₃

Other reducing agents were also tested (like ascorbic acid) and other precursors (like AgCl), for example according to the combination:
- AgCl + NH₄OH → Ag(NH₃)₂ + CTAB + reducing agent

The following combination was also tested:
- AgNO₃ + NH₃ + NaOH + NaCl

The combinations described above were first prepared by mixing together the different components (in order to obtain/stabilize suspensions of silver nanoparticles).

At this point, said combinations were placed in contact with microparticles of TiO₂.

None of the above produced interesting results. In other words, the powders obtained (mainly white and not grey) showed much worse properties than the particles obtained in example 1.

### Example 3

This example reports the procedure for the production of tiles using the treated particles obtained according to example 1. The tiles were prepared as follows:
- Brushing and washing finished surface tiles with water to remove surface dirt
- Drying in a dryer
- Application on a tile surface, by means of airless sprayer, of a TiO₂-based formulation (TiO₂ microparticles supporting silver-based nanoparticles obtained according to example 1), water and a commercial dispersing agent with the following composition:

| | |
|---|---|
| polysaccharide with high molecular weight (xanthan gum) | 11.55 % |
| quartz | 11.55 % |
| sodium ion | 30.50 % |
| chloride ion | 46.40 % |

100 litres of the formulation were obtained by mixing 85 1 of water, 15 1 of the dispersing agent and 2 kg of microparticles of TiO₂ supporting silver-based nanoparticles obtained according to example 1.

Approximately 0.8 g of formulation were spray-applied over one square metre of tiles.

The tiles thus obtained underwent the following successive treatments.
- Oven baking at 680°C with a cycle of approximately 80 min cold-cold (in particular, the cycle entails bringing the tiles from ambient temperature to 680°C in a time of 40 minutes; once this temperature has been reached, the tiles are cooled so as to again reach ambient temperature in a further 40 minutes);
- Washing with water and detergent and mechanical brushing to remove the TiO₂ not firmly adhered to the surface of the tiles;
- Drying under compressed air;
- Quality control;
- Storage.

The tiles were characterised by means of high resolution SEM-field emission.

### Example 4

This example reports experimental tests relative to the activity on VOC (Volatile Organic Compounds) of the treated particles obtained according to example 1.

The experimental procedure reported in C.L. Bianchi, S. Gatto, C. Pirola, A. Naldoni, A. Di Michele, G. Cerrato, V. Crocellà, V. Capucci, "Photocatalytic degradation of acetone, acetaldehyde and toluene in gas-phase: comparison between nano and micro-sized TiO2", Applied Catalysis B: Env., 146 (2014) 123-130 was followed. The experimental parameters used were:
400 ppm of pure pollutant mixed in synthetic air
**UV-A** lamp at 30W/m²
Controlled humidity
Test duration: max 2 hours
VOC used: acetone, acetaldehyde, ethanol, toluene.

The results obtained are reported in the following tables 1 and 2, in which Ktq indicates simple TiO₂ powder (Kronos 1077) and K_Ag indicates the treated particles obtained according to example 1.

**Table 1**

| UV | ACETONE | | ACETALDEHYDE | | ETHANOL | |
|---|---|---|---|---|---|---|
| Time (min) | Ktq | K_Ag | Ktq | K_Ag | Ktq | K_Ag |
| 0 | 0 | 0 | 0 | 0 | 0 | 0 |
| 30 | 45 | 52 | 84 | 90 | 68 | 89 |
| 60 | 87 | 88 | 98 | 100 | 97 | 100 |
| 90 | 100 | 100 | 100 | 100 | 100 | 100 |
| 120 | 100 | 100 | 100 | 100 | 100 | 100 |

The table reports the degradation % values. It can be observed that the sample doped with Ag surprisingly shows a constantly higher photocatalytic efficiency with respect to the non-doped sample.

The toluene molecule was tested in the same conditions as those above, but with kinetics having an overall duration of 6 hours, given the complexity of the organic molecule to be degraded. The results (degradation % values) are reported in the following table:

**Table 2**

| TOLUENE | Ktq | K_Ag |
|---|---|---|
| Time (min) | | |
| 0 | 0 | 0 |
| 60 | 18 | 42 |
| 120 | 26 | 56 |
| 180 | 32 | 65 |
| 240 | 38 | 70 |
| 300 | 42 | 80 |
| 360 | 46 | 85 |

Also in this case, even without reaching complete degradation, the doping with Ag surprisingly improves the photodegradation efficiency of the toluene.

Further tests were performed using the following experimental parameters:
400 ppm of pure pollutant mixed in synthetic air
Flat LED lamp at 4000 K (UV-A a 0W/m²)
Controlled humidity
Test duration: 4 hours
VOC used: acetone, acetaldehyde, ethanol, toluene

The results obtained (degradation % values) are reported in the following tables 3 and 4, in which Ktq indicates simple TiO₂ powder (Kronos 1077) and K_Ag indicates the treated particles obtained according to example 1.

**Table 3**

| LED | ACETONE | | ACETALDEHYDE | | ETHANOL | |
|---|---|---|---|---|---|---|
| Time (min) | Ktq | K_Ag | Ktq | K_Ag | Ktq | K_Ag |
| 0 | 0 | 0 | 0 | 0 | 0 | 0 |
| 90 | 0 | 15 | 0 | 18 | 0 | 21 |
| 180 | 0 | 17 | 0 | 20 | 0 | 24 |
| 240 | 0 | 20 | 0 | 22 | 0 | 27 |

The sample Ktq does not show photocatalytic efficiency under LED illumination.

On the contrary, the Ag doped sample surprisingly shows a good activity if irradiated in the visible range also considering the high concentration at which the powders are tested (much higher concentration with respect to a hypothetical ambient pollution with said molecules).

**Table 4**

| TOLUENE | Ktq | K_Ag |
|---|---|---|
| Time (min) | | |
| 0 | 0 | 0 |
| 60 | 0 | 2 |
| 120 | 0 | 5 |
| 180 | 0 | 7 |
| 240 | 0 | 11 |
| 300 | 0 | 13 |
| 360 | 0 | 15 |

Also in the case of the toluene, the use of K_Ag provides a fairly good result, taking into account that the Ktq does not lead to any photodegradation, as already seen also with the other VOC.

In relation to the results obtained, it can be noted that the improvements obtained were not predictable. The known antibacterial activity of the Ag could not have predicted in any way the strong improvement in the photodegradation results observed experimentally.

### Example 5

This example reports experimental tests relative to the activity on NOx of the treated particles obtained according to example 1.

We followed the experimental procedure reported in vi. C.L Bianchi, C. Pirola, F. Galli, G. Cerrato, S. Morandi, V. Capucci, "Pigmentary TiO2: a challenge for its use as photocatalyst in NOx air purification", Chemical Eng J, 261, (2015) 76-82. The experimental parameters used were:
1 ppm of pure pollutant mixed in synthetic air
UV-A lamp at 10W/m²
Controlled humidity
Test duration: 2 hours

The results obtained (degradation % values) are reported in the following table 5 in which Ktq indicates simple TiO₂ powder (Kronos 1077) and K_Ag indicates the treated particles obtained according to example 1.

**Table 5**

| NOx | Ktq | K_Ag |
|---|---|---|
| Time (min) | | |
| 0 | 0 | 0 |
| 60 | 80 | 89 |
| 120 | 87 | 96 |

The presence of the Ag once again improves the performance also for degradation of the NOx.

Further tests were performed using the following experimental parameters:
1 ppm of pure pollutant mixed in synthetic air
Flat LED lamp at 4000K (UV-A at 0W/m2)
Controlled humidity
Test duration: 2 hours

The results obtained (degradation % values) are reported in the following table 6 in which Ktq indicates simple TiO₂ powder (Kronos 1077) and K_Ag indicates the treated particles obtained according to example 1.

**Table 6**

| NOx | Ktq | K_Ag |
|---|---|---|
| Time (min) | | |
| 0 | 0 | 0 |
| 120 | 4 | 48 |

The difference in the photocatalytic efficiency when the samples are irradiated in the visible range is very impressive. After 2 hours the sample doped with Ag has degraded almost 50% of the pollutant present, while the Ktq sample shows a barely perceptible photocatalytic activity.

Also in these cases, it can be noted that the improvements obtained were not predictable. The known antibacterial activity of the Ag could not have predicted in any way the strong improvement in the photodegradation results experimentally observed.

### Example 6

This example reports experimental tests relative to the activity of the treated tiles obtained according to example 3.

Unfortunately there are no laws and/or parameters to refer to for performing tests that allow accurate evaluation of the activity of ceramic materials in the visible range and, in experimental terms, it has been seen that it is not possible to use the same parameters as those used in examples 4 and 5 since an extremely low quantity of TiO₂ powder is present on the tiles, not comparable with that present in the reactors for the tests on the powders.

For this reason we are still at the stage of optimizing the parameters to be used for the tests, modifying those used for the tests on powders.

Two parameters in particular are subject to modification: initial quantity of NOx (dropping from 1 ppm to 0.5 ppm) and test duration (2 to 6 hours).

In the same way for the tests with the VOC, the quantities of pollutants were reduced from 400 to 200 ppm.

It is observed that, in both the cases, both for the NOx and for the VOC, the concentrations of the polluting molecules are such as to be always much higher than the values of the atmospheric pollution.

For the tests on the NOx the following parameters were used:
0.5 ppm of pure pollutant mixed in synthetic air
Flat LED lamp at 4000K (UV-A at 0W/m2)
Controlled humidity
Test duration: 6 hours

The results obtained (degradation % values) are reported in the following table 7 in which Ktq indicates tiles on the surface of which simple TiO₂ powder (Kronos 1077) has been deposited and K_Ag indicates tiles on the surface of which the treated particles obtained according to example 3 have been deposited.

**Table 7**

| NOx | Ktq | K_Ag |
|---|---|---|
| Time (min) | | |
| 0 | 0 | 0 |
| 360 | 0 | 19 |

For the tests on the VOC the following parameters were used:
200 ppm of pure acetaldehyde mixed in synthetic air
Flat LED lamp at 4000K (UV-A at 0W/m2)
Controlled humidity
Test duration: 6 hours

The results obtained (degradation % values) are reported in the following table 8 in which Ktq indicates tiles on the surface of which simple TiO₂ powder (Kronos 1077) has been deposited and K_Ag indicates tiles on the surface of which the treated particles obtained according to example 3 have been deposited.

**Table 8**

| NOx | Ktq | K_Ag |
|---|---|---|
| Time (min) | | |
| 0 | 0 | 0 |
| 360 | 0 | 12 |

It is observed that also as regards the tiles, the results obtained are absolutely surprising, since it was not in any way possible to hypothesise beforehand an improvement in the photodegradation properties following the addition of silver (so far known only for its antibacterial characteristics).

### Example 7

This example reports experimental tests relative to the antibacterial activity of the particles obtained according to example 1.

According to the procedure established by the ISO 27447:2009 standard, the antibacterial activity is tested both with UV-A lamp and LED lamp.

According to the procedure established by the ISO 22196:2009 standard, the antibacterial activity is tested in the dark. Also in this case the results are positive.

## Claims

1. A process to produce composite particles; the process comprises a loading step, during which silver-based nanoparticles are obtained bound to outer surfaces of microparticles of TiO₂ so as to obtain said composite particles; said loading step comprising, in turn, a mixing sub-step, a drying sub-step and a heating sub-step, which is at least partially subsequent to the drying sub-step; during the mixing sub-step, a solution containing silver ions and the microparticles of TiO₂ is kept under stirring so as to obtain an intermediate mixture; during the drying sub-step, the water content of the intermediate mixture is reduced (in particular, the intermediate mixture is dried) by supplying heat to the intermediate mixture itself; during the heating sub-step, said intermediate mixture is kept at a temperature higher than 300°C for at least 30 minutes; the silver-based nanoparticles being selected from the group consisting of: silver nanoparticles, silver oxide nanoparticles and a combination thereof; the silver-based nanoparticles comprise silver oxide; the microparticles of TiO₂ having a mean diameter from 0.1 µm to 1 pm; at least 98% by weight of the microparticles of TiO₂ with respect to the overall weight of the microparticles of TiO₂ being of anatase.

2. The process according to claim 1, wherein the silver-based nanoparticles comprise nanoparticles of a combination of silver and silver oxide.

3. The process according to claim 1 or 2, wherein the mixing sub-step lasts at least 18 hours at a temperature ranging from 30°C to 50°C; during the drying sub-step the intermediate mixture is kept at a temperature higher than 80°C (in particular, higher than 85°C) and lower than 150°C (in particular, lower than 110°C) for at least 10 hours (in particular, up to 35 hours); during the heating sub-step, said intermediate mixture is kept at a temperature from 350°C to 600°C for a time ranging from 40 minutes to 150 minutes; the solution has 3% to 12% by weight of the silver ions with respect to the sum of the weights of the silver ions and the microparticles of TiO₂.

4. The process according to one of the preceding claims, wherein the microparticles of TiO₂ have a mean diameter from 0.1 µm to 0.5 µm (in particular, measured by means of XRD); the microparticles of TiO₂ are of anatase; the composite particles have a mean diameter from 0.1 µm to 0.5 µm.

5. The process according to one of the preceding claims and comprising a sonication step, which is at least partially prior to the loading step and during which the microparticles of TiO₂ are sonicated in a liquid.

6. The process according to one of the preceding claims and comprising a wetting step, which is at least partially prior to the loading step and during which the microparticles of TiO₂ are wetted with an organic solvent.

7. The process according to one of the preceding claims, wherein the mixing sub-step, the drying sub-step and the heating sub-step are carried out in the absence of a reducing agent.

8. The process according to one of the preceding claims, wherein the mixing sub-step and the drying sub-step are carried out in the absence of an emulsifying agent, in particular an organic compound.

9. The process according to one of the preceding claims, wherein the silver-based nanoparticles comprise silver nanoparticles.

10. Composite particles, each of which comprises a respective microparticle of TiO₂ and a plurality of respective silver-based nanoparticles supported by the relative microparticle of TiO₂; in particular, each microparticle of TiO₂ has a respective outer surface; the silver-based nanoparticles are bound to said outer surface and exposed towards the outside and are selected from the group consisting of: silver nanoparticles, silver oxide nanoparticles and a combination thereof; the microparticles of TiO₂ have a mean diameter ranging from 0.1 µm to 1 µm; the silver-based nanoparticles comprise silver oxide; the particles being obtainable (or obtained) with the process according to any one of the preceding claims.

11. Particles according to claim 10, wherein the silver-based nanoparticles comprise nanoparticles of a combination of silver and silver oxide.

12. Particles according to one of claims 10 or 11, comprising 3 to 12% by weight of the silver-based nanoparticles with respect to the sum of the weights of the silver-based nanoparticles and of the microparticles of TiO₂.

13. Particles according to one of claims from 10 to 12, wherein the microparticles of TiO₂ have a mean diameter from 0.1 µm to 0.5 µm (in particular, measured by means of XRD), the silver-based nanoparticles have a mean diameter from 1 nm to 20 nm (in particular, measured by means of TEM); the composite particles have a mean diameter from 0.1 µm to 0.5 µm (in particular, measured by means of XRD).

14. Particles according to one of claims from 10 to 13, wherein at least 99.5% by weight of the microparticles of TiO₂, with respect to the overall weight of the microparticles of TiO₂, are of anatase.

15. Particles according to one of claims from 10 to 14, wherein the silver-based nanoparticles comprise, in particular are, nanoparticles of silver and silver oxide.

16. A method for the production of a treated article; the method comprises an application step, during which composite particles according to one of claims from 10 to 15 are applied on a surface of a base product, in particular a ceramic tile; each composite particle comprises a respective microparticle of TiO₂ and a plurality of respective silver-based nanoparticles supported by the relative microparticle of TiO₂; the silver-based nanoparticles are 3% to 12% by weight with respect to the overall weight of the microparticles of TiO₂ and of the silver-based nanoparticles.

17. The method according to claim 16, wherein the microparticles of TiO₂ have a mean diameter from 0.1 µm to 0.5 µm (in particular, measured by means of XRD), the silver-based nanoparticles have a mean diameter from 1 nm to 20 nm (in particular, measured by means of TEM); at least 98% (in particular, at least 99.5%) by weight of the microparticles of TiO₂ with respect to the overall weight of the microparticles of TiO₂ are of anatase; the composite particles have a mean diameter from 0.1 µm to 0.5 µm (in particular, measured by means of XRD).

18. The method according to claim 16 or 17, and comprising a baking step, which is at least partially subsequent to the application step and during which the base product on which the composite particles have been applied is treated at a temperature from 400°C to 780°C.

19. The method according to one of claims from 16 to 18, wherein said composite particles have a surface area (in particular, measured by means of BET) from 5 m²/g to 30 m²/g.

20. The method according to one of claims from 16 to 19, wherein, during the application step, from 0.6 g to 1.3 g of composite particles are applied per square metre of said surface of the base product.

21. The method according to one of claims from 16 to 20, wherein the composite particles are applied in a suspension comprising from 70% to 90% by volume of water with respect to the overall volume of the suspension and, in particular, from 10% to 20% by volume of a dispersing agent with respect to the overall volume of the suspension, which in turn comprises from 25% to 35% by weight of sodium ion with respect to the overall weight of the dispersing agent, and from 7% to 16% by weight of silica with respect to the overall weight of the dispersing agent (more precisely, quartz).

22. The method according to one of claims from 16 to 21, wherein the microparticles of TiO₂ have respective outer surfaces; the method comprises a loading step, during which the silver-based nanoparticles are obtained bound to the outer surfaces so as to obtain said composite particles; said step comprises in turn a mixing sub-step, a drying sub-step and a heating sub-step, at least partially subsequent to the drying step; during the mixing sub-step, a solution containing silver ions and the microparticles of TiO₂ is kept under stirring (in particular, at a temperature from 30°C to 50°C) so as to obtain an intermediate mixture; during the drying sub-step, the intermediate mixture is kept at a temperature higher than 80°C (in particular, higher than 85°C) and lower than 150°C (in particular, lower than 110°C); during the heating sub-step, said intermediate mixture is kept at a temperature higher than 300°C (in particular, from 350°C to 600°C).

23. A method according to claim 22, wherein, during the drying sub-step the intermediate mixture is kept at a temperature higher than 80°C (in particular, higher than 85°C) and lower than 150°C (in particular, lower than 110°C) for at least 10 hours (in particular, up to 35 hours); during the heating sub-step, said intermediate mixture is kept at a temperature higher than 300°C (in particular, from 350°C to 600°C) for at least 30 minutes (in particular, from 40 minutes to 80 minutes).

24. A treated article obtained (or obtainable) with a method according to one of claims from 16 to 23.

25. An article according to claim 24, and comprising composite particles arranged on the surface of the article; in particular, the article has from 0.6 g to 1.3 g of composite particles per square metre of said surface.

## Patentansprüche

1. Prozess zum Herstellen von Verbundpartikeln; der Prozess umfasst einen Schritt des Beladens, bei dem silberbasierte Nanopartikel, die an Außenflächen von TiO₂-Mikropartikeln gebunden sind, erlangt werden, um die Verbundpartikel zu erlangen; wobei der Schritt des Beladens nacheinander einen Teilschritt des Mischens, einen Teilschritt des Trocknens und einen Teilschritt des Erwärmens, der wenigstens teilweise auf den Teilschritt des Trocknens folgt, umfasst; bei dem Teilschritt des Mischens wird eine Lösung, die Silberionen und die TiO₂-Mikropartikel enthält, unter Rühren gehalten, um ein Zwischengemisch zu erlangen; bei dem Teilschritt des Trocknens wird der Wassergehalt des Zwischengemischs verringert (insbesondere wird das Zwischengemisch getrocknet), indem dem Zwischengemisch selbst Wärme zugeführt wird; bei dem Teilschritt des Erwärmens wird das Zwischengemisch für wenigstens 30 Minuten auf einer Temperatur gehalten, die höher als 300 °C ist; wobei die silberbasierten Nanopartikel ausgewählt sind aus der Gruppe, bestehend aus: Silbernanopartikeln, Silberoxidnanopartikeln und einer Kombination davon; die silberbasierten Nanopartikeln umfassen Silberoxid; die TiO₂-Mikropartikel weisen einen mittleren Durchmesser von 0,1 µm bis 1 µm auf; wobei wenigstens 98 Gewichts-% der TiO₂-Mikropartikel in Bezug auf das Gesamtgewicht der TiO₂-Mikropartikel aus Anatas bestehen.

2. Prozess nach Anspruch 1, wobei die silberbasierten Nanopartikel Nanopartikel aus einer Kombination aus Silber und Silberoxid umfassen.

3. Prozess nach Anspruch 1 oder 2, wobei der Teilschritt des Mischens bei einer Temperatur im Bereich von 30 °C bis 50 °C wenigstens 18 Stunden dauert; bei dem Teilschritt des Trocknens wird das Zwischengemisch auf einer Temperatur gehalten, die wenigstens 10 Stunden (insbesondere bis zu 35 Stunden) höher als 80 °C (insbesondere höher als 85 °C) und niedriger als 150 °C (insbesondere niedriger als 110 °C) ist; bei dem Teilschritt des Erwärmens wird das Zwischengemisch für einen Zeitraum im Bereich von 40 Minuten bis 150 Minuten auf einer Temperatur von 350 °C bis 600 C gehalten; die Lösung weist 3 Gewichts-% bis 12 Gewichts-% der Silberionen in Bezug auf die Summe der Gewichte der Silberionen und der TiO₂-Mikropartikel auf.

4. Prozess nach einem der vorstehenden Ansprüche, wobei die TiO₂-Mikropartikel einen mittleren Durchmesser von 0,1 µm bis 0,5 µm (insbesondere mittels XRD gemessen) aufweisen; die TiO₂-Mikropartikel aus Anatas bestehen; die Verbundpartikel einen mittleren Durchmesser von 0,1 µm bis 0,5 µm aufweisen.

5. Prozess nach einem der vorstehenden Ansprüche und einen Schritt der Beschallung umfassend, der wenigstens teilweise vor dem Schritt des Beladens erfolgt und bei dem die TiO₂-Mikropartikel in einer Flüssigkeit beschallt werden.

6. Prozess nach einem der vorstehenden Ansprüche und einen Schritt der Benetzung umfassend, der wenigstens teilweise vor dem Schritt des Beladens erfolgt und bei dem die TiO₂-Mikropartikel mit einem organischen Lösungsmittel benetzt werden.

7. Prozess nach einem der vorstehenden Ansprüche, wobei der Teilschritt des Mischens, der Teilschritt des Trocknens und der Teilschritt des Erwärmens in Abwesenheit eines Reduktionsmittels ausgeführt werden.

8. Prozess nach einem der vorstehenden Ansprüche, wobei der Teilschritt des Mischens und der Teilschritt des Trocknens in Abwesenheit eines Emulgierungsmittels, insbesondere einer organischen Verbindung, ausgeführt werden.

9. Prozess nach einem der vorstehenden Ansprüche, wobei die silberbasierten Nanopartikel Silbernanopartikel umfassen.

10. Verbundpartikel, wobei jedes davon ein entsprechendes TiO₂-Mikropartikel und eine Vielzahl entsprechender silberbasierter Nanopartikel, die von dem relativen TiO₂-Mikropartikel getragen werden, umfasst; insbesondere weist jedes TiO₂-Mikropartikel eine entsprechende Außenfläche auf; die silberbasierten Nanopartikel sind an die Außenfläche gebunden und nach außen freiliegend und sind ausgewählt aus der Gruppe, bestehend aus: Silbernanopartikeln, Silberoxidnanopartikeln und eine Kombination davon; die TiO₂-Mikropartikel weisen einen mittleren Durchmesser im Bereich von 0,1 µm bis 1 µm auf; die silberbasierten Nanopartikel umfassen Silberoxid; wobei die Partikel mit dem Prozess nach einem beliebigen der vorstehenden Ansprüche erlangt werden können (oder erlangt werden).

11. Partikel nach Anspruch 10, wobei die silberbasierten Nanopartikel Nanopartikel aus einer Kombination von Silber und Silberoxid umfassen.

12. Partikel nach einem der Ansprüche 10 oder 11, umfassend 3 bis 12 Gewichts-% der silberbasierten Nanopartikel in Bezug auf die Summe der Gewichte der silberbasierten Nanopartikel und der TiO₂-Mikropartikel.

13. Partikel nach einem der Ansprüche 10 bis 12, wobei die TiO₂-Mikropartikel einen mittleren Durchmesser von 0,1 µm bis 0,5 µm aufweisen (insbesondere mittels XRD gemessen), die silberbasierten Nanopartikel einen mittleren Durchmesser von 1 nm bis 20 nm aufweisen (insbesondere mittels TEM gemessen); die Verbundpartikel einen mittleren Durchmesser von 0,1 µm bis 0,5 µm (insbesondere mittels XRD gemessen) aufweisen.

14. Partikel nach einem der Ansprüche 10 bis 13, wobei wenigstens 99,5 Gewichts-% der TiO₂-Mikropartikel in Bezug auf das Gesamtgewicht der TiO₂-Mikropartikel aus Anatas bestehen.

15. Partikel nach einem der Ansprüche 10 bis 14, wobei die silberbasierten Nanopartikel Nanopartikel aus Silber und Silberoxid umfassen, insbesondere sind.

16. Verfahren zur Herstellung eines behandelten Artikels; das Verfahren umfasst einen Schritt der Aufbringung, bei dem Verbundpartikel nach einem der Ansprüche 10 bis 15 auf eine Fläche eines Grundprodukts, insbesondere eine Keramikfliese, aufgebracht werden; jeder Verbundpartikel umfasst einen entsprechenden TiO₂-Mikropartikel und eine Vielzahl von entsprechenden silberbasierten Nanopartikeln, die von dem relativen TiO₂-Mikropartikel getragen werden; die silberbasierten Nanopartikel weisen 3 Gewichts-% bis 12 Gewichts-% in Bezug auf das Gesamtgewicht der TiO₂-Mikropartikel und der silberbasierten Nanopartikel auf.

17. Verfahren nach Anspruch 16, wobei die TiO₂-Mikropartikel einen mittleren Durchmesser von 0,1 µm bis 0,5 µm aufweisen (insbesondere mittels XRD gemessen), die silberbasierten Nanopartikel einen mittleren Durchmesser von 1 nm bis 20 nm aufweisen (insbesondere mittels TEM gemessen); wenigstens 98 Gewichts-% (insbesondere wenigstens 99,5 Gewichts-%) der TiO₂-Mikropartikel in Bezug auf das Gesamtgewicht der TiO₂-Mikropartikel aus Anatas bestehen; die Verbundpartikel einen mittleren Durchmesser von 0,1 µm bis 0,5 µm aufweisen (insbesondere mittels XRD gemessen).

18. Verfahren nach Anspruch 16 oder 17 und umfassend einen Schritt der Wärmebehandlung, der wenigstens teilweise auf den Schritt der Aufbringung folgt und bei dem das Grundprodukt, auf das die Verbundpartikel aufgebracht wurden, bei einer Temperatur von 400 °C bis 780 °C behandelt wird.

19. Verfahren nach einem der Ansprüche 16 bis 18, wobei die Verbundpartikel eine Oberfläche (insbesondere mittels BET gemessen) von 5 m²/g bis 30 m²/g aufweisen.

20. Verfahren nach einem der Ansprüche 16 bis 19, wobei bei dem Schritt der Aufbringung 0,6 g bis 1,3 g Verbundpartikel pro Quadratmeter der Fläche des Grundprodukts aufgebracht werden.

21. Verfahren nach einem der Ansprüche 16 bis 20, wobei die Verbundpartikel in einer Suspension aufgebracht werden, die 70 Volumen-% bis 90 Volumen-% Wasser in Bezug auf das Gesamtvolumen der Suspension und insbesondere 10 Volumen-% bis 20 Volumen-% eines Dispergierungsmittels in Bezug auf das Gesamtvolumen der Suspension umfasst, die wiederum 25 Gewichts-% bis 35 Gewichts-% Natriumionen in Bezug auf das Gesamtgewicht des Dispergierungsmittels und 7 Gewichts-% bis 16 Gewichts-% Siliciumdioxid in Bezug auf das Gesamtgewicht des Dispergierungsmittels (genauer Quarz) umfasst.

22. Verfahren nach einem der Ansprüche 16 bis 21, wobei die TiO₂-Mikropartikel entsprechende Außenflächen aufweisen; das Verfahren einen Schritt des Beladens umfasst, bei dem die silberbasierten Nanopartikel, die an die Außenflächen gebunden sind, erlangt werden, um die Verbundpartikel zu erlangen; der Schritt nacheinander einen Teilschritt des Mischens, einen Teilschritt des Trocknens und einen Teilschritt des Erwärmens umfasst, der wenigstens teilweise auf den Teilschritt des Trocknens folgt; bei dem Teilschritt des Mischens eine Lösung, die Silberionen und die TiO₂-Mikropartikel enthält, unter Rühren gehalten wird (insbesondere auf einer Temperatur von 30 °C bis 50 °C), um ein Zwischengemisch zu erlangen; bei dem Teilschritt des Trocknens das Zwischengemisch auf einer Temperatur gehalten wird, die höher als 80 °C (insbesondere höher als 85 °C) und niedriger als 150 °C (insbesondere niedriger als 110 °C) ist; bei dem Teilschritt des Erwärmens das Zwischengemisch auf einer Temperatur gehalten wird, die höher als 300 °C (insbesondere zwischen 350 °C und 600 °C) ist.

23. Verfahren nach Anspruch 22, wobei bei dem Teilschritt des Trocknens das Zwischengemisch auf einer Temperatur gehalten wird, die wenigstens 10 Stunden (insbesondere bis zu 35 Stunden) höher als 80 °C (insbesondere höher als 85 °C) und niedriger als 150 °C (insbesondere niedriger als 110 °C) ist; bei dem Teilschritt des Erwärmens das Zwischengemisch für wenigstens 30 Minuten (insbesondere von 40 Minuten bis 80 Minuten) auf einer Temperatur gehalten wird, die höher als 300 °C (insbesondere von 350 °C bis 600 °C) ist.

24. Behandelter Artikel, der mit einem Verfahren nach einem der Ansprüche 16 bis 23 erhalten wird (oder erhaltbar ist).

25. Artikel nach Anspruch 24 und umfassend Verbundpartikel, die auf der Fläche des Artikels angeordnet sind; insbesondere verfügt der Artikel über 0,6 g bis 1,3 g Verbundpartikel pro Quadratmeter der Fläche.

## Revendications

1. Procédé pour produire des particules composites ; lequel procédé comprend une étape de chargement, durant laquelle des nanoparticules à base d'argent sont obtenues en étant liées à des surfaces extérieures de microparticules de TiO₂ de façon que soient obtenues lesdites particules composites ; ladite étape de chargement comprenant, tour à tour, une sous-étape de mélange, une sous-étape de séchage et une sous-étape de chauffage, qui est au moins partiellement subséquente à la sous-étape de séchage ; durant la sous-étape de mélange, une solution contenant des ions argent et les microparticules de TiO₂ est maintenue sous agitation de façon qu'un mélange intermédiaire soit obtenu ; durant la sous-étape de séchage, la teneur en eau du mélange intermédiaire est réduite (en particulier, le mélange intermédiaire est séché) par apport de chaleur au mélange intermédiaire lui-même ; durant la sous-étape de chauffage, ledit mélange intermédiaire est maintenu à une température supérieure à 300 °C pendant au moins 30 minutes ; les nanoparticules à base d'argent étant choisies dans le groupe constitué par : les nanoparticules d'argent, les nanoparticules d'oxyde d'argent et leurs combinaisons ; le nanoparticules à base d'argent comprennent de l'oxyde d'argent ; les microparticules de TiO₂ ayant un diamètre moyen de 0,1 µm à 1 µm ; au moins 98 % en poids des microparticules de TiO₂ par rapport au poids global des microparticules de TiO₂ étant de l'anatase.

2. Procédé selon la revendication 1, dans lequel les nanoparticules à base d'argent comprennent des nanoparticules d'une combinaison d'argent et d'oxyde d'argent.

3. Procédé selon la revendication 1 ou 2, dans lequel la sous-étape de mélange dure au moins 18 heures à une température située dans la plage allant de 30 °C à 50 °C ; durant la sous-étape de séchage le mélange intermédiaire est maintenu à une température supérieure à 80 °C (en particulier supérieure à 85 °C) et inférieure à 150 °C (en particulier inférieure à 110 °C) pendant au moins 10 heures (en particulier jusqu'à 35 heures) ; durant la sous-étape de chauffage, ledit mélange intermédiaire est maintenu à une température de 350 °C à 600 °C pendant un temps situé dans la plage allant de 40 minutes à 150 minutes ; la solution a 3 % à 12 % en poids d'ions argent par rapport à la somme des poids des ions argent et des microparticules de TiO₂.

4. Procédé selon l'une des revendications précédentes, dans lequel les microparticules de TiO₂ ont un diamètre moyen de 0,1 µm à 0,5 µm (en particulier, mesuré par DRX) ; les microparticules de TiO₂ sont en anatase ; les particules composites ont un diamètre moyen de 0,1 µm à 0,5 µm.

5. Procédé selon l'une des revendications précédentes et comprenant une étape de sonication, qui est au moins partiellement antérieure à l'étape de chargement, et durant laquelle les microparticules de TiO₂ sont soumises à une sonication dans un liquide.

6. Procédé selon l'une des revendications précédentes et comprenant une étape de mouillage, qui est au moins partiellement antérieure à l'étape de chargement, et durant laquelle les microparticules de TiO₂ sont mouillées avec un solvant organique.

7. Procédé selon l'une des revendications précédentes, dans lequel la sous-étape de mélange, la sous-étape de séchage et la sous-étape de chauffage sont effectuées en l'absence d'un agent réducteur.

8. Procédé selon l'une des revendications précédentes, dans lequel la sous-étape de mélange et la sous-étape de séchage sont effectuées en l'absence d'un agent émulsionnant, en particulier d'un composé organique.

9. Procédé selon l'une des revendications précédentes, dans lequel les nanoparticules à base d'argent comprennent des nanoparticules d'argent.

10. Particules composites comprenant chacune une microparticule respective de TiO₂ et une pluralité de nanoparticules à base d'argent respectives supportées par la microparticule correspondante de TiO₂ ; en particulier chaque microparticule de TiO₂ a une surface extérieure respective ; les nanoparticules à base d'argent sont liées à ladite surface extérieure et exposées vers l'extérieur et sont choisies dans le groupe constitué par : les nanoparticules d'argent, les nanoparticules d'oxyde d'argent et leurs combinaisons ; les microparticules de TiO₂ ont un diamètre moyen situé dans la plage allant de 0,1 µm à 1 µm ; les nanoparticules à base d'argent comprennent de l'oxyde d'argent ; les particules pouvant être obtenues (ou étant obtenues) par le procédé selon l'une quelconque des revendications précédentes.

11. Particules selon la revendication 10, dans lesquelles les nanoparticules à base d'argent comprennent des nanoparticules d'une combinaison d'argent et d'oxyde d'argent.

12. Particules selon l'une des revendications 10 et 11, comprenant 3 à 12 % en poids des nanoparticules à base d'argent par rapport à la somme des poids des nanoparticules à base d'argent et des microparticules de TiO₂.

13. Particules selon l'une des revendications 10 à 12, dans lesquelles les microparticules de TiO₂ ont un diamètre moyen de 0,1 µm à 0,5 µm (en particulier, mesuré par DRX), les nanoparticules à base d'argent ont un diamètre moyen de 1 nm à 20 nm (en particulier mesuré par MET) ; les particules composites ont un diamètre moyen de 0,1 µm à 0,5 µm (en particulier mesuré par DRX).

14. Particules selon l'une des revendications 10 à 13, dans lesquelles au moins 99,5 % en poids des microparticules de TiO₂, par rapport au poids global des microparticules de TiO₂, sont en anatase.

15. Particules selon l'une des revendications 10 à 14, dans lesquelles les nanoparticules à base d'argent comprennent, en particulier sont, des nanoparticules d'argent et d'oxyde d'argent.

16. Procédé pour la production d'un article traité ; lequel procédé comprend une étape d'application, durant laquelle des particules composites selon l'une des revendications 10 à 15 sont appliquées sur une surface d'un produit de base, en particulier d'un carreau en céramique ; chaque particule composite comprend une microparticule respective de TiO₂ et une pluralité de nanoparticules à base d'argent respectives supportées par la microparticule correspondante de TiO₂ ; les nanoparticules à base d'argent représentent de 3 % à 12 % en poids par rapport au poids global des microparticules de TiO₂ et des nanoparticules à base d'argent.

17. Procédé selon la revendication 16, dans lequel les microparticules de TiO₂ ont un diamètre moyen de 0,1 µm à 0,5 µm (en particulier, mesuré par DRX), les nanoparticules à base d'argent ont un diamètre moyen de 1 nm à 20 nm (en particulier mesuré par MET) ; au moins 98 % (en particulier au moins 99,5 %) en poids des microparticules de TiO₂, par rapport au poids global des microparticules de TiO₂, sont en anatase ; les particules composites ont un diamètre moyen de 0,1 µm à 0,5 µm (en particulier mesuré par DRX).

18. Procédé selon la revendication 16 ou 17, comprenant une étape de cuisson, qui est au moins partiellement subséquente à l'étape d'application, et durant laquelle le produit de base sur lequel les particules composites ont été appliquées est traité à une température de 400 °C à 780 °C.

19. Procédé selon l'une des revendications 16 à 18, dans lequel lesdites particules composites ont une surface spécifique (en particulier mesurée par BET) de 5 m²/g à 30 m²/g.

20. Procédé selon l'une des revendications 16 à 19, dans lequel, durant l'étape d'application, 0,6 g à 1,3 g des particules composites sont appliqués par mètre carré de ladite surface du produit de base.

21. Procédé selon l'une des revendications 16 à 20, dans lequel les particules composites sont appliquées dans une suspension comprenant 70 % à 90 % en volume d'eau par rapport au volume global de la suspension et, en particulier, 10 % à 20 % en poids d'un agent dispersant par rapport au volume global de la suspension, lequel à son tour comprend 25 % à 35 % en poids d'ions sodium par rapport au poids global de l'agent dispersant, et 7 % à 16 % en poids de silice (plus précisément de quartz) par rapport au poids global de l'agent dispersant.

22. Procédé selon l'une des revendications 16 à 21, dans lequel les microparticules de TiO₂ ont des surfaces extérieures respectives ; lequel procédé comprend une étape de chargement, durant laquelle les nanoparticules à base d'argent sont obtenues en étant liées aux surfaces extérieures de façon que lesdites particules composites soient obtenues ; ladite étape comprend à son tour une sous-étape de mélange, une sous-étape de séchage et une sous-étape de chauffage, qui est au moins partiellement subséquente à l'étape de séchage ; durant la sous-étape de mélange, une solution contenant des ions argent et les microparticules de TiO₂ est maintenue sous agitation (en particulier à une température de 30 °C à 50 °C) de façon qu'un mélange intermédiaire soit obtenu ; durant la sous-étape de séchage, le mélange intermédiaire est maintenu à une température supérieure à 80°C (en particulier supérieure à 85 °C) et inférieure à 150 °C (en particulier inférieure à 110 °C) ; durant la sous-étape de chauffage, ledit mélange intermédiaire est maintenu à une température supérieure à 300 °C (en particulier de 350 °C à 600 °C).

23. Procédé selon la revendication 22, dans lequel, durant la sous-étape de séchage, le mélange intermédiaire est maintenu à une température supérieure à 80 °C (en particulier supérieure à 85 °C) et inférieure à 150 °C (en particulier inférieure à 110 °C) pendant au moins 10 heures (en particulier jusqu'à 35 heures) ; durant la sous-étape de chauffage, ledit mélange intermédiaire est maintenu à une température supérieure à 300 °C (en particulier de 350 °C à 600 °C) pendant au moins 30 minutes (en particulier de 40 minutes à 80 minutes).

24. Article traité obtenu (ou pouvant être obtenu) par un procédé selon l'une quelconque des revendications 16 à 23.

25. Article selon la revendication 24, comprenant des particules composites disposées sur la surface de l'article ; en particulier lequel article a 0,6 g à 1,3 g de particules composites par mètre carré de ladite surface.
